# EUROPÄISCHE PATENTANMELDUNG

(11) **EP 1 416 227 A2**
(43) Veröffentlichungstag der Anmeldung: **06.05.2004**
(21) Anmeldenummer: 03018506.0
(22) Anmeldetag: 15.08.2003
(51) Int. Cl.: F24C 15/10, H05B 3/74, C03C 17/00, C03C 17/04, B44C 5/04

(54) **Glas-/Glaskeramik-Kochfläche**

(30) Priorität: 19.09.2002 DE 10243500
(71) Anmelder: Schott Glas, 55122 Mainz (DE); Carl Zeiss Stiftung Trading as Schott Glaswerke, 55122 Mainz (DE)
(72) Erfinder: Striegler, Harald, Dr., 55437 Ockenheim (DE)
(74) Vertreter: Fuchs Mehler Weiss & Fritzsche

(57) **Zusammenfassung**

Es sind neben eingefärbten derartigen Kochflächen auch solche bekannt, die aus einer transparenten, nicht eingefärbten Glas-/Glaskeramikplatte bestehen.

Es ist bekannt, die Unterseite einer derartigen Kochfläche mit einer IR-durchlässigen, anorganischen Emaille-Farbe, bestehend aus einem Glasfluß und anorganischen Pigmenten besteht, zu beschichten.

Um neben der notwendigen hohen Temperaturbeständigkeit eine ausreichende Blickdichtheit und möglichst geringe Festigkeitsminderung der Kochfläche zu erzielen sieht die Erfindung vor, dass der Glasflussanteil der Emaille-Farbe im Bereich von 1 % - 30 % und der Pigmentanteil entsprechend im Bereich von 70 % - 99 % liegt.

## Beschreibung

Die Erfindung bezieht sich auf eine Kochfläche, bestehend aus einer transparenten, nicht eingefärbten Glaskeramikplatte oder Glasplatte aus vorgespanntem Spezialglas, deren Unterseite eine IR-durchlässige Schicht aus einer temperaturbeständigen anorganischen Emaille-Farbe, bestehend aus einem Glasfluß und anorganischen Pigmenten, trägt.

Kochfelder mit einer Glas- oder Glaskeramikplatte als Kochfläche sind gängiger Stand der Technik. Glas-Kochflächen sind typischerweise für sichtbares Licht transparent, aber auch Glaskeramik-Kochflächen sind in der Regel transluzent und daher bei Bestrahlung von oben, z.B. durch die Küchenbeleuchtung oder von unten, durch die Heizstrahler, durchscheinend, so dass Heizelemente, Kabel und andere Bauelemente, die unter der Glaskeramik-Kochfläche verborgen sind, erkannt werden können. Der Anblick dieser Bauelemente wird von den Benutzern als störend empfunden.

Derartige Glas-/Glaskeramik-Kochflächen sind typischerweise, wie aus der EP 0 220 333 hervorgeht, mit farbgebenden lonen zur Verringerung der Transmission eingefärbt, damit die unterhalb der Glas-/Glaskeramikplatte untergebrachten Funktions-Komponenten des Kochfeldes praktisch von oben nicht einsehbar sind. Diese Kochflächen sind daher praktisch für Strahlung im sichtbaren Bereich nicht transparent und erscheinen in Aufsicht schwarz.

Es ist auch bekannt, dieses Problem durch eine blickdichte Beschichtung der Unterseite der transparenten bzw. transluzenten Glas- bzw. Glaskeramik-Kochfläche zu lösen. So zeigen die JPH 7-17409 und JP 51-89517 als Kochflächen dienende Glaskeramikplatten aus einer transparenten, nicht eingefärbten Glaskeramik, deren Unterseite mit einer temperaturbeständigen Farbe bedruckt ist. Diese Farbschicht ist so ausgebildet, dass sie die notwendige Nichttransparenz herstellt, d.h. sie ersetzt die sonst übliche Einfärbung, damit die Kochfläche in Aufsicht ebenfalls schwarz erscheint.

Durch die EP 0 746 179 A2 ist auch die Verwendung von Abdeckmasken zur Herstellung einer partiellen Nichttransparenz bekannt, jedoch ist das Aufbringen einer blickdichten Beschichtung, insbesondere wenn dies mittels eines Siebdruckes wie im Fall der DE 199 06 737 A1 erfolgt, kostengünstiger.

Die blickdichte Beschichtung besteht in der Regel aus einem Farblack, der organische oder anorganische Pigmente enthält. Die Haftung der Farbe auf der Glaskeramik wird durch organische Zusätze erreicht. So nennt die vorgenannte DE 199 06 737 A1 einen Alkydharzlack für die Beschichtung. Aus DE 100 14 373 A1 und DE 200 19 210 U1 sind für blickdichte Beschichtungen, die zugleich decorgebend sind, Farblacke wie Lüsterfarben, Sol-Gel-Schichten, Edelmetallfarben, aber auch mit Silicon aufgeklebte Folien (aus z.B. Aluminium) bekannt. Auch Beschichtungen, die keine organischen Bestandteile enthalten, sind aus vorgenannter DE 200 19 210 U1 bekannt, z.B. bestehend aus einer Farbe aus Borosilicatglas als Glasfluß und Titan- oder Ceroxid als Pigment.

Zur blickdichten Beschichtung der Unterseite der Glas-/Glaskeramik-Kochflächen werden in der Praxis nahezu ausschließlich Farben auf organischer Basis verwendet, weil diese Farben die Festigkeit der Glaskeramik-Kochfläche nicht oder nur geringfügig erniedrigen. Der Nachteil dieser organischen Farben besteht darin, dass sie aufgrund ihrer organischen Basis nur begrenzt temperaturbeständig sind. Typische Bestandteile wie Silicone, Polyester oder Harze zersetzen sich oberhalb 400° C, im Betrieb erreicht die Kochzonen-Unterseite jedoch bis zu 600° C. Die o.g. organischen Farben zersetzen sich daher bei thermischer Belastung allmählich, wodurch Zersetzungsprodukte freigesetzt werden und die Haftung der Beschichtung mit der Zeit nachlässt.

Bei der in vorgenannter DE 200 19 210 U1 offenbarten Farbe aus Borosilicatglasfluß und Titan- oder Ceroxid als Pigmente ist zwar die Temperaturbeständigkeit gegeben, jedoch ist einmal die Festigkeit der Glaskeramik-Kochfläche wegen der unterschiedlichen thermischen Ausdehnungskoeffizienten und der durch bedingten mechanischen Spannungen deutlich erniedrigt und die Farbschicht ist zum anderen nicht blickdicht.

Der Erfindung liegt die Aufgabe zugrunde, ausgehend von der eingangs bezeichneten, unterseitig mit einer anorganischen Farbe beschichteten Glas-/Glaskeramik-Kochfläche, wie sie aus der vorgenannten DE 200 19 210 U1 bekannt ist, diese hinsichtlich der Beschichtung so auszubilden, dass
- sie auf dem Kochflächen-Material einen blickdichten Überzug bildet,
- bis mindestens 600°C stabil ist, und
- die Festigkeit der Kochfläche nicht oder nur unwesentlich herabsetzt.

Die Lösung dieser Aufgabe gelingt bei einer Glas-/Glaskeramik-Kochfläche, bestehend aus einer transparenten, nicht eingefärbten Glaskeramikplatte oder Glasplatte aus vorgespanntem Spezialglas, deren Unterseite eine IR-durchlässige Schicht aus einer temperaturbeständigen, anorganischen Emaille-Farbe, bestehend aus einem Glasfluß und anorganischen Pigmenten, trägt, gemäß der Erfindung dadurch, dass der Glasflussanteil der Emaille-Farbe im Bereich von 1 % - 30% und der Pigmentanteil entsprechend im Bereich von 70 % - 99% liegt.

Dadurch, dass die erfindungsgemäße Beschichtung aus einer anorganischen Emaille-Farbe besteht, ist sie dauerhaft bis ca. 600°C stabil. Die Verwendung herkömmlicher, anorganischer Emaille-Farben ist jedoch nicht möglich, da die Farben entweder keine blickdichte Beschichtung ergeben oder die Festigkeit der Glaskeramik-Kochfläche unerwünscht stark herabsetzen. Eine Beschichtung mit den gewünschten Eigenschaften gemäß der Aufgabenstellung kann überraschenderweise durch eine Modifikation der Emaille-Farben erhalten werden, wenn erfindungsgemäß der Glasflussanteil auf nur 1 - 30 % herabgesetzt wird und der Pigmentanteil entsprechend 70 - 99 % beträgt. Mit dieser Zusammensetzung wird aufgrund des hohen Pigmentanteiles eine blickdichte Beschichtung erhalten. Wegen des geringen Glasflussanteils wird die Festigkeit der Glaskeramik-Kochfläche nur geringfügig erniedrigt.

Versuche haben dabei gezeigt, dass eine solche Emaille-Farbe trotz des geringen Glasflussanteils hervorragend auf dem Glas oder der Glaskeramik haftet, weil selbst der geringe Anteil an Glasfluß noch zu einer festen Bindung zwischen den Pigmenten und dem Glas bzw. der Glaskeramik führt.

Die Festigkeit der Glas-/Glakeramik-Kochfläche wird gemäß einer Ausgestaltung der Erfindung besonders wenig beeinträchtigt, wenn der Glasfluß ein Glas mit extrem niedriger thermischer Ausdehnung (α ≤ 4 · 10⁻⁶ K⁻¹) verwendet wird. Ein solches Glas ist beispielsweise ein Borosilikat-Glas.
Besonders günstige Werte hinsichtlich Festigkeit, Blickdichtheit und Haftung werden erzielt, wenn der Glasflussanteil im Bereich von 5 % - 20 % und der Pigmentanteil im Bereich von 80 % - 95 % liegt.

Fertigungstechnisch sowie hinsichtlich der Beständigkeit der Beschichtung ist es günstig, wenn die unterseitige Beschichtung durch Siebdruck aufgebracht ist. Dabei kann das Anpastverhältnis zwischen 2 bis 0,4 betragen.

Um unterschiedliche Farbeffekte zu erzielen, ist die Kochfläche so ausgebildet, dass die unterseitige Beschichtung eine Mischung anorganischer Pigmente aufweist.

Auch kann die unterseitige Schicht neben der Funktion der Blickdichtheit auch eine farbgebende Dekorierung bilden.

Weitere Ausgestaltungen der Erfindung sind in Unteransprüchen gekennzeichnet.

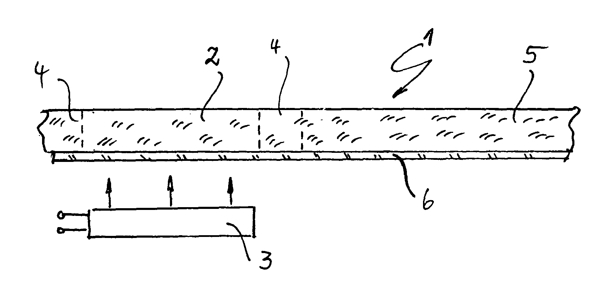

Anhand eines in der Zeichnung dargestellten Ausführungsbeispieles wird die Erfindung näher beschrieben. Die einzige Figur zeigt dabei in einer schematisierten Schnitt-Darstellung einen Ausschnitt aus einem Kochfeld mit einer transparenten, nicht eingefärbten Glaskeramikplatte 1 als Kochfläche, die an der Unterseite eine blickdichte Beschichtung aus einer hoch temperaturbeständigen, anorganischen Emaille-Farbe besitzt.

Die Glaskeramikplatte 1 weist mindestens eine gestrichelt angedeutete Kochzone 2, den Heißbereich, auf, dem ein elektrisch betriebenes Strahlungs-Heizelement 3 zugeordnet ist. Der Heißbereich 2 besitzt typischerweise eine Temperatur von > ca. 350° C. Er ist umgeben von einer gestrichelt angedeuteten ringförmigen Übergangszone 4 mit einer Stärke von 0 - 25 mm und dem Kaltbereich 5, in dem die Temperatur in der Regel unterhalb von 220° C liegt.

Auf der Unterseite der transparenten Glaskeramikplatte 1 ist eine durchgehende Beschichtung 6 aus der erfindungsgemäßen anorganischen Emaille-Farbe aufgebracht.

Diese durchgehende Beschichtung ist fertigungstechnisch am einfachsten aufzubringen, z.B. durch Siebdruck. Prinzipiell würde es jedoch genügen, nur den Heißbereich 2 und den Übergangsbereich 4 mit der hochtemperaturbeständigen anorganischen Emaille-Farbe zu beschichten, und den Kaltbereich 5 mit anderen, weniger temperaturbeständigen Farben, wie sie beispielsweise aus der eingangs genannten DE 100 14 373 A1 bekannt sind, zu beschichten.

Im folgenden wird ein Ausführungsbeispiel der Beschichtung einer Kochfläche mit der erfindungsgemäßen anorganischen Emaillefarbe beschrieben.

Eine Glaskeramik-Platte, z. B. "Ceran® Hightrans" der Fa. Schott Glas, wurde unterseitig mit einer Farbpaste aus 10 (Gewichts-) Teilen Farbpulver und 20 (Gewichts-) Teilen Siebdruckmedium (auf Acrylat-Basis) mittels Siebdrucktechnik unter Verwendung eines Siebs mit einer Maschenweite von 150 µ beschichtet. Das Farbpulver bestand aus 10 Gew.-% Glasfluß und 90 Gew.-% Pigment "Sicocer F schwarz 2904", einem Co/Ni/Mn/Fe/Cr-Spinell der BASF.

Als Glasflüsse wurden drei verschiedene Glasflüsse mit den Schott Glas internen Kodes GF1, GF2 und Borofloat® 33 verwendet, deren Zusammensetzung sich aus den Patenten DE 197 21 737 C1 (GF1), DE 198 34 801 C2 (GF2) und DE 196 43 870 C2 (Borofloat® 33) bekannt ist (siehe auch nachstehende Tabelle 1).

**Tabelle 1**

| Oxid | Gewichtsanteil (Gew.-%) | | |
|---|---|---|---|
| | GF1 | GF2 | Borofloat® 33 |
| Al₂O₃ | 10-20 | 3-10 | 2,4 |
| BaO | 0-4 | 0-4 | |
| B₂O₃ | 15-27 | >15-23 | 12,8 |
| CaO | 0-4 | 0-4 | |
| F | 0-3, im Austausch gegen Sauerstoff | 0-4, im Austausch gegen Sauerstoff | |
| K₂O | < 2 | < 2 | 0,6 |
| Li₂O | 0-5 | 0-6 | |
| MgO | 0-3 | 0-4 | |
| Na₂O | 0-5 | 0-5 | 3,3 |
| SiO₂ | 43-58 | 50-65 | 80,9 |
| Sb₂O₃ | 0-2 | | |
| SrO | 0-4 | 0-4 | |
| TiO₂ | 0-3 | 0-4 | |
| ZnO | 0-4 | <3 | |
| ZrO₂ | 0-4 | 0-4 | |

Die auf vorstehende Weise unterseitig beschichteten Glaskeramikplatten waren nach Einbrand der Farben ausreichend blickdicht, die Biegefestigkeit lag im für Kochflächen üblichen Bereich von mindestens 110 MPa (Mittelwert, bestimmt nach DIN EN 1288-5) und die Temperaturbeständigkeit wurde durch Temperversuche bei 670° C bestätigt. Die Stoßfestigkeit nach DIN 60335 betrug > 0,5 Nm.

Weitere Versuche ergaben, dass das Anpastverhältnis (Verhältnis Farbpulver zum Siebdruckmedium) 2 bis 0,4 betragen kann.

Die Biegefestigkeit war ausreichend hoch (> 110 MPa), wenn der Glasflussanteil des Farbpulvers im Bereich von 5 - 20 % lag. Der Einfluß des Pigments auf die Eigenschaften der Unterseitenbeschichtung ist gering. Daher können nahezu alle beliebigen anorganischen Pigmente verwendet werden und folglich nicht nur eine schwarze Unterseitenbeschichtung, wie sie mit dem o.g. Pigment "Sicocer F schwarz 2904" erhalten wurde, hergestellt werden, sondern Unterseiten-Beschichtungen beliebiger Farbe, wie beispielsweise mit TiO₂ (weiß), NiO, Cr₂O₃ (grün), Fe₂O₃ (braun), Cr/Al-Korund (pink), Ti/Sb/Ni-Rutil, ZrN-Zirkon (gelb) und Co/Zn/Al-Spinell, Co/Si-Olivin (blau).

## Patentansprüche

1. Kochfläche, bestehend aus einer transparenten, nicht eingefärbten Glaskeramikplatte (1) oder Glasplatte aus vorgespanntem Spezialglas, deren Unterseite eine IR-durchlässige Schicht (6) aus einer temperaturbeständigen, anorganischen Emaille-Farbe, bestehend aus einem Glasfluß und anorganischen Pigmenten, trägt, **dadurch gekennzeichnet, dass** der Glasflussanteil der Emaille-Farbe im Bereich von 1 % - 30 % und der Pigmentanteil entsprechend im Bereich von 70 % - 99 % liegt.

2. Kochfläche nach Anspruch 1, **dadurch gekennzeichnet, dass** der Glasflussanteil im Bereich von 5 % - 20 % und der Pigmentanteil im Bereich von 80 % - 95 % liegt.

3. Kochfläche nach Anspruch 1 oder 2, **dadurch gekennzeichnet, dass** der Glasfluß aus einem Glas mit extrem niedrigen thermischen Ausdehnungskoeffizienten α ≤ 4 · 10⁻⁶ K⁻¹ besteht.

4. Kochfläche nach Anspruch 3, **dadurch gekennzeichnet, dass** der Glasfluß aus einem Borosilikatglas besteht.

5. Kochfläche nach einem der Ansprüche 1 bis 4, **dadurch gekennzeichnet, dass** die unterseitige Beschichtung (6) durch Siebdruck und Einbrennen aufgebracht ist.

6. Kochfläche nach Anspruch 5, **dadurch gekennzeichnet, dass** das Verhältnis Farbpulver zum Siebdruckmedium 0,4 bis 2,0 beträgt.

7. Kochfläche nach einem der Ansprüche 1 bis 6, **dadurch gekennzeichnet, dass** die unterseitige Beschichtung (6) eine Mischung anorganischer Pigmente aufweist.

8. Kochfläche nach einem der Ansprüche 1 bis 7, **dadurch gekennzeichnet, dass** die unterseitige Beschichtung (6) als farbgebende Dekorierung ausgebildet ist.

9. Kochfläche nach einem der Ansprüche 1 bis 8, **dadurch gekennzeichnet, dass** die unterseitige Schicht (6) mehrlagig ausgebildet ist.

10. Kochfläche nach einem der Ansprüche 1 bis 8, **dadurch gekennzeichnet, dass** die unterseitige Schicht (6) mit einer Deckschicht aus einer anderen Farbe hinterlegt ist.

11. Kochfläche nach einem der Ansprüche 1 bis 10, **dadurch gekennzeichnet, dass** die Markierung der Kochzonen (2) durch Aussparungen in der unterseitigen Schicht (6) oder durch unterschiedliche Farben/Farbkontraste in der Schicht gebildet sind.

12. Kochfläche nach einem der Ansprüche 1 bis 11, **dadurch gekennzeichnet, dass** in der unterseitigen Schicht (6) Displayfenster, insbesondere zur Restwärmeanzeige, für farbige LEDs oder LCDs, ausgebildet sind.

13. Kochfläche nach einem der Ansprüche 1 bis 12, **dadurch gekennzeichnet, dass** die Biegefestigkeit mindestens 110 Mpa beträgt und die Stoßfestigkeit > 0,5 Nm ist.
